# EUROPÄISCHE PATENTSCHRIFT

(11) **EP 0 923 763 B1**
(45) Veröffentlichungstag und Bekanntmachung des Hinweises auf die Patenterteilung: **28.02.2001**
(21) Anmeldenummer: 97931727.8
(22) Anmeldetag: 10.07.1997
(51) Int. Cl.: G06K 19/073, G07F 7/10

(54) **MIKROPROZESSOR, INSBESONDERE ZUR VERWENDUNG IN EINER CHIPKARTE, MIT EINER STEUERUNGSEINHEIT UND MIT EINEM DIE STEUERUNGSEINHEIT UMGEBENDEN GEHÄUSE**
MICROPROCESSOR, PARTICULARLY FOR USE IN A CHIP CARD WITH A CONTROL UNIT AND A HOUSING SURROUNDING THE CONTROL UNIT
MICROPROCESSEUR DESTINE NOTAMMENT A UNE CARTE A PUCE ET COMPRENANT UNE UNITE DE COMMANDE ET UN BOITIER PROTEGEANT L'UNITE DE COMMANDE

(30) Priorität: 23.08.1996 DE 19634133
(43) Veröffentlichungstag der Anmeldung: 23.06.1999
(73) Patentinhaber: Infineon Technologies AG, 81541 München (DE)
(72) Erfinder: HUBER, Michael, D-93152 Nittendorf (DE); STAMPKA, Peter, D-92421 Schwandorf (DE); HEITZER, Josef, D-93090 Bach (DE)
(74) Vertreter: Zedlitz, Peter, Dipl.-Inf.
(86) Internationale Anmeldenummer: DE9701457
(87) Internationale Veröffentlichungsnummer: WO9808189

(56) Entgegenhaltungen:
- EP-A- 0 481 881
- EP-A- 0 565 480
- EP-A- 0 718 794
- EP-A- 4 115 398
- DE-A- 4 018 688
- FR-A- 2 580 834
- P. WIOAS ET AL.: "An ISFET-FIA system for high precision pH recording", SENS. ACTUATORS B, CHEM. (SWITZERLAND), SENSORS AND ACTUATORS B (CHEMICAL) , , 01. August 1993-31. August 1993, Band B15, Nr. 1-3, Seiten 68 - 74

## Beschreibung

Die Erfindung betrifft einen Mikroprozessor, insbesondere zur Verwendung in einer Chipkarte, mit einer Steuerungseinheit sowie mit einem die Steuerungseinheit umgebenden Gehäuse. Weiterhin betrifft die Erfindung eine Chipkarte mit einem ebensolchen Mikroprozessor.

In zunehmendem Maße werden Zahlungsvorgänge für kleinere Geldbeträge mit Hilfe eines Chipkartensystems abgewickelt. Eine Chipkarte hat dazu die Funktion eines "Geldspeichers", wobei auf einer Chipkarte eine Mikroprozessor vorgesehen ist, der eine Steuerungseinheit, einen Datenspeicher zur Aufnahme des auf der Chipkarte gespeicherten Geldbetrages, Schnittstellen insbesondere zur Eingabe und Ausgabe von für Zahlungen relevante Daten, eine Steuerungseinrichtung zur Steuerung des Verarbeitungsablaufes der im Zusammenhang mit der Chipkarte verarbeiteten Daten sowie einen Befehlsspeicher aufweist, der das Betriebsprogramm für die Steuerungseinrichtung aufnimmt. Derartige Chipkartensysteme werden im Kreditkarten-Bereich, bei Pay-TV-Anwendungssystemen und auch bei Systemen zur Überwachung des Zutritts zu sicherheitsrelevanten Einrichtungen und Gebäuden verwendet.

Schon bald nach Einführung der ersten Chipkartensysteme wurden Versuche unternommen, Chipkarten zu manipulieren, um sich mit derartigen manipulierten Chipkarten unberechtigte Vorteile zu verschaffen. So wurde versucht, Chipkarten nachzubilden und deren Datenspeicher mit einem manipulierten Guthaben zu versehen.

Dem wurde dadurch entgegengewirkt, daß die im Datenspeicher der Chipkarte vorhandenen Daten so verschlüsselt werden, daß eine Nachbildung der Daten nicht mehr möglich ist. Dazu werden Algorithmen wie DES, FES, DAS, DEA und RSA angewendet.

Nach wie vor liegt jedoch ein erheblicher Schwachpunkt der bekannten Chipkartensysteme darin, daß der durch ein Gehäuse umgebene Mikroprozessor auf einfache Weise freigelegt werden kann. Dazu wird das Gehäuse des Mikroprozessors über einen gewissen Zeitraum hinweg einer aggressiven Substanz wie beispielsweise einer Säure ausgesetzt, so daß das Gehäuse weggeatzt wird und der Mikroprozessor freiliegt. Der freigelegte Mikroprozessor kann dann in seinem Strukturaufbau analysiert werden. Dazu können die Anschlüsse des Mikroprozessors mit unterschiedlichen Eingangssignalen beaufschlagt werden, so daß insbesondere Informationen über das im Befehlsspeicher vorhandene Programm zur Steuerung des Verarbeitungsablaufes gewonnen werden können. Damit können beispielsweise die Daten im Datenspeicher entschlüsselt werden.

Die EP 0 565 480 A2 zeigt die Verwendung von Indikatorelementen in Chipkarten, welche auf physikalische oder andere Einflüsse zur Zerstörung der Funktion von Chipkarten in eindeutiger und nachweisbarer Weise reagieren.

Die DE 41 15 398 A1 zeigt ein Verfahren zum Herstellen eines Biosensors mit planarisierter Fläche, welche die Gefahr des Einreißens von Membranen vermindert. Es umfaßt die Schritte des Erzeugens eines Gateisolators, des Erzeugens und Strukturierens einer Polysiliziumschicht, des Realisierens von Source und Drain, des Freilegens eines aktiven Gatebereichs, des Anordnens des ISFET innerhalb eines Gehäuses derart, daß der aktive Gatebereich des ISFET innerhalb eines Fensters des Gehäuses zu liegen kommt, und des Aufbringens der biologischen oder biochemischen Membran auf den aktiven Gatebereich.

Der Aufsatz "An ISFET-FIA system for high precision pH recording" in Sensors and Actuators B, 15-16 (1993) 68-74 (P. Woias et al.) zeigt einen ISFET-Sensor zur Messung eines pH-Werts in einer Flüssigkeit, der eine hohe Stabilität und hohe Meßgenauigkeit auch bei geringen Fließgeschwindigkeiten aufweist.

Die EP 0 481 881 A1 zeigt einen integrierten Schaltkreis, der einen Programmspeicher, einen Datenspeicher, einen E/A-Port und ein Register aufweist. Das Register speichert die Signale von Sensoren für ungewöhnliche Betriebsbedingungen. Beim Auftreten von ungewöhnlichen Betriebsbedingungen hält der Mikroprozessor den Betrieb an.

Es ist daher Aufgabe der Erfindung, einen Mikroprozessor bzw. eine Chipkarte bereitzustellen, der bzw. die gegen eine Manipulierung geschützt ist.

Diese Aufgabe wird durch den Gegenstand des unabhängigen Ansprüche gelöst. Vorteilhalfte Weiterbildungen ergeben sich aus den jeweiligen Unteransprüchen.

Diese Aufgabe wird gemäß der Erfindung insbesondere auch dadurch gelöst, daß im Bereich des Gehäuses des Mikroprozessors mindestens ein Umweltzustände anzeigender, mit der Steuerungseinheit in Verbindung stehender Sensor vorgesehen ist, wobei die Steuerungseinheit so ausgebildet ist, daß sie in einen inaktiven Zustand versetzbar ist, wenn ihr vom Sensor ein Meßsignal zugeführt wird, das ein vorbestimmten Umweltzustand anzeigt.

Alternativ dazu kann die Steuerungseinheit auch so ausgebildet sein, daß sie in einen inaktiven Zustand versetzbar ist, wenn ihr vom Sensor kein Meßsignal zugeführt wird, das einen bestimmten Umweltzustand anzeigt.

Die Erfindung beruht auf dem Grundgedanken, daß eine Chipkarte mit einem Mikroprozessor vorgesehen wird, der ohne erhebliche Inaktivierung bzw. Zerstörung des Mikroprozessors selbst nicht mehr auf einfache Wiese durch chemische und/oder physikalische Methoden freigelegt werden kann. Dazu ist ein Sensor vorgesehen, der mit der Steuerungseinheit verbunden ist. Die Steuerungseinheit tastet dabei regelmäßig den Sensor ab und überprüft, ob der Sensor einen Umweltzustand anzeigt, der beispielsweise mit dem Umweltzustand bei der Fertigung des Mikroprozessors übereinstimmt. Wenn der Umweltzustand im Bereich des Sensors wie beispielsweise durch Anwenden einer Chemikalie verändert ist, verändert sich das vom Sensor ausgehende Signal, was von der Steuerungseinheit abgetastet und erkannt wird. In diesem Fall geht die Steuerungseinheit in einen inaktiven Zustand über, so daß selbst bei einem freigelegten Mikroprozessor dessen Funktion nicht mehr auf einfache Weise nachvollzogen werden kann. Im Hinblick auf das vorstehende ist der Begriff "Steuerungseinheit" weit auszulegen, das heißt es kann jegliche Komponente des Mikroprozessors oder der Chipkarte außer Betrieb gesetzt werden, solange dadurch gewährleistet ist, daß ein Zugriff auf die Daten oder die Struktur des Datenspeichers, des Programmspeichers oder der Steuerungseinheit verhindert oder erschwert wird.

Erfindungsgemäß ist es auch möglich, einen Sensor vorzusehen, der insbesondere das Vorhandensein typischer zum Freilegen von Mikroprozessoren verwendeter Chemikalien als "Umweltzustand" anzeigt. So können Sensoren zur Anwendung kommen, die auf Säuren ansprechen. Wenn ein derartiger Sensor das Vorhandensein einer Säure im Bereich des Gehäuses anzeigt, ist anzunehmen, daß ein Versuch vorliegt, dem Mikroprozessor zu manipulieren. Dies wird von der Steuerungseinheit abgetastet, worauf sie in einen inaktiven Zustand übergeht.

Gemäß der Erfindung sind auch beide Ausführungsformen zugleich möglich, wobei dann mindestens zwei Sensoren oder ein Sensor mit Doppelfunktion vorgesehen sind. Die Steuerungseinheit ist in diesen Fall so ausgebildet, daß sie in einen inaktiven Zustand versetzbar ist, wenn ihr der eine Sensor ein Meßsignal zuführt, das einen vorbestimmten "verdächtigen" Umweltzustand anzeigt und/oder wenn ihr der andere Sensor kein Meßsignal mehr zuführt, das einen vorbestimmten "normalen" Umweltzustand anzeigt. Die Steuerungseinrichtung wird dann in einen inaktiven Zustand versetzt, wenn wenigstens einer der Sensoren einen vom Normalzustand abweichenden Umweltzustand anzeigt.

Der erfindungsgemäße, einen vorbestimmten Umweltzustand anzeigende Sensor ist dabei ausdrücklich nicht auf einen Sensor beschränkt, der das Vorliegen oder Nicht-Vorliegen einer Chemikalie anzeigt. Es sind auch physikalische Veränderungen anzeigende Sensoren denkbar, wobei insbesondere Drucksensoren oder mechanische Sensoren vorgesehen werden können. Solche mechanischen Sensoren können beispielsweise als feine Leitungsdrähte im Bereich des Gehäuses ausgeführt sein, die bei einen Freischaben des Mikroprozessors zwangsweise zerstört werden müssen.

In Ausgestaltung der Erfindung ist im Bereich des Gehäuses eine von einem Sensor wahrnehmbare Substanz vorgesehen, wobei die Substanz auch wenigstens zwei Komponenten aufweisen kann, von denen wenigstens eine vom Sensor wahrnehmbar ist. Durch das Vorsehen einer derartigen Substanz ist es möglich, zum Zeitpunkt der Fertigung des Mikroprozessors einen definierten Umweltzustand herzustellen, wobei gerade bei der Ausführung der Substanz mit mehreren Komponenten durch das Verändern ihrer Mischungsverhältnisse eine Codierung eines Umweltzustandes vorgenommen werden kann. Bei einem quantitativ auf chemische Verbindungen reagierenden Sensor ist es so möglich, das Vorhandensein einer Substanz abzutasten, die eine bestimmte quantitative Zusammensetzung aufweist. Mit der letztgenannten Ausgestaltung kann auf besonders einfache Weise verhindert werden, daß bei einer Manipulation in einem ersten Schritt der Mikroprozessor freigelegt wird und daß im zweiten Schritt eine Substanz im Bereich des Sensors angebracht wird, um dem Mikroprozessor erneut zu aktivieren. Selbst bei Kenntnis der Bestandteile der Substanz ist es nahezu unmöglich, diese in der ursprünglichen Zusammensetzung nachzubilden. Durch eine derartige einfache Kodierung erhöht sich die Sicherheit des erfindungsgemäßen Mikroprozessors beträchtlich.

In einer weiteren Ausgestaltung der Erfindung ist der Sensor im Inneren des Gehäuses vorgesehen. Dabei ist es gemäß dieser Ausgestaltung der Erfindung besonders vorteilhaft, die Substanz, auf die der Sensor anspricht, bereits in die Abdeckmasse des Mikroprozessors bzw. in das Gehäusematerial einzulagern. Bei einem Ablösen des Gehäuses tastet dies der Sensor sofort ab, sö daß die Steuerungseinheit in einen inaktiven Zustand versetzt wird, in dem ihre Eigenschaften nicht nachvollziehbar sind.

Gemäß einer besonders vorteilhaften Abwandlung der Erfindung ist der Sensor als Biosensor ausgebildet. Derartige Sensoren sind im Stand der Technik bereits bekannt und können zuverlässig, genau und besonders klein ausgestaltet werden, so daß sie für die Anwendung im Zusammenhang mit Mikroprozessoren prädestiniert sind. So sind zum Beispiel Sensoren zur Messung des menschlichen Blutzuckers bekannt, die einfach und vorteilhaft im Zusammenhang mit dem erfindungsgemäßen Mikroprozessor verwendet werden können. Derartige Biosensoren können sowohl die Existenz eines Stoffes als auch die Einzelkonzentrationen der Stoffe in einem Stoffgemisch schnell und einfach messen. Dadurch sind Biosensoren sowohl als qualitative Sensoren, die nur auf die Anwesenheit eines bestimmten Stoffs reagieren, als auch als quantitative Sensoren anwendbar, mit denen Konzentrationen von Substanzen erfaßt werden können.

Gemäß einer besonders einfachen Ausführung liefert der Sensor im erfindungsgemäßen Mikroprozessor ein digitales Ausgangssignal. Ein derartiger Sensor eignet sich besonders für quantitative Analysen. Dies kann zum Beispiel bei einem Sensor der Fall sein, der dafür bestimmt ist, die Anwendung von Säure auf das Gehäuse des Mikroprozessors abzutasten.

In Ausgestaltung des vorstehend beschriebenen Mikroprozessors kann der Sensor auch ein analoges Ausgangssignal liefern. Gerade im Zusammenhang mit einem von der Steuerungseinrichtung bzw. von dem Gehäuse des Mikroprozessors getrennt angeordneten Sensor ergibt eine derartige Ausgestaltung einen erhöhten Schutz gegen unerwünschte Manipulationen, und zwar insbesondere dann, wenn die für den Betrieb der Steuerungseinrichtung notwendigen, vom Sensor zu erfassenden Umweltzustände in der Steuerungseinheit oder im Datenspeicher des Mikroprozessors festgehalten sind. Die Daten, die den für den Betrieb der Steuerungseinheit notwendigen Umweltzustand kennzeichnen, können dann nämlich nur ausgelesen werden, wenn der Sensor die Steuerungseinheit in einen aktiven Zustand versetzt hält. Im Zuge einer Manipulation an dem Mikroprozessor tastet der Sensor jedoch die Manipulation ab und schaltet die Steuerungseinheit und damit den Zugriff auf die dem Sensor charakterisierenden Daten ab, bevor auf diese zugegriffen werden kann.

Ein Sensor, der ein analoges Ausgangssignal liefert, kann auch besonders einfach im Zusammenhang mit den bekannten Mikroprozessoren verwendet werden, da diese in aller Regel bereits Digital-Analog-Wandler aufweisen, die die Daten eines derartigen Sensors so umwandeln können, daß sie durch den Mikroprozessor verarbeitbar sind.

Ganz besonders vorteilhaft ist im Zusammenhang mit dem wie vorstehend ausgestalteten erfindungsgemäßen Mikroprozessor ein Sensor, der ein Meßsignal liefert, das hinsichtlich der wiederholten Abtastung eines wechselnden Umweltzustandes einen Hysterese-Charakter aufweist. Nach einem Freilegen des Sensors wird dadurch verhindert, daß der Mikroprozessor nach Wiederherstellen eines Umweltzustandes nach dem Freilegen des Sensors wieder im Betrieb gesetzt werden kann. Durch einen an sich bei Sensoren unerwünschten Hysterese-Charakter des Sensors liefert derselbe Sensor bei zeitlich versetzter, wiederholter Herstellung eines Umweltzustandes wie beispielsweise durch Entfernen und Wiederanfügen derselben charakteristischen Substanz im Bereich des Sensors nämlich jeweils unterschiedliche Ausgangssignale. Daher liegt beim Wiederanfügen einer identischen Substanz im Bereich des Sensors ein Ausgangssignal des Sensors vor, daß sich von demjenigen beispielsweise bei der Herstellung des erfindungsgemäßen Mikroprozessors unterscheidet. Die Steuerungseinrichtung ist dann vorteilhafterweise so eingerichtet, daß dieser Unterschied abgetastet und damit festgestellt werden kann, ob eine Manipulation im Bereich des Mikroprozessors vorliegt.

Schließlich ist der erfindungsgemäße Mikroprozessor vorteilhafterweise so ausgestaltet, daß ein ihm vom Sensor zugeführtes Signal dauerhaft abspeicherbar ist. Ein derartiges Abspeichern eines Signals, das dem Mikroprozessor von wenigstens einem Sensor zugeführt worden ist, kommt vor allem dann in Frage, wenn ein für den Zeitpunkt der Fertigung maßgeblicher Umweltzustand für den Vergleich mit einem Umweltzustand zu einem späteren Zeitpunkt festgehalten werden soll. Ein derartiges Abspeichern ist bei den im Stand der Technik bekannten Mikroprozessoren besonders einfach möglich, da diese bereits einen kleinen elektrisch programmierbaren Nur-LeseSpeicher (PROM) aufweisen, der bisher nur zum Abspeichern beispielsweise einer Seriennummer verwendet wird.

Die Erfindung betrifft ferner eine Chipkarte mit einem Mikroprozessor, der gemäß einem oder mehreren der Ansprüche 1 bis 10 ausgestaltet ist. Zwei der sich auf diese Weise aus den Ansprüchen 1 bis 10 ergebenden erfindungsgemäßen Ausgestaltungen sind in den unabhängigen Ansprüchen 11 und 12 festgelegt.

Die Erfindung wird anhand eines Ausführungsbeispiels mit Bezug auf die anliegenden Zeichnungen näher erläutert.

Figur 1 zeigt ein Blockdiagramm einer Schaltung in einer erfindungsgemäßen Chipkarte.

Figur 2 zeigt ein Diagramm eines Ausgangssignals eines typischen Sensors der erfindungsgemäßen Chipkarte.

Figur 3 zeigt ein Diagramm eines Ausgangssignals eines weiteren typischen Sensors der erfindungsgemäßen Chipkarte.

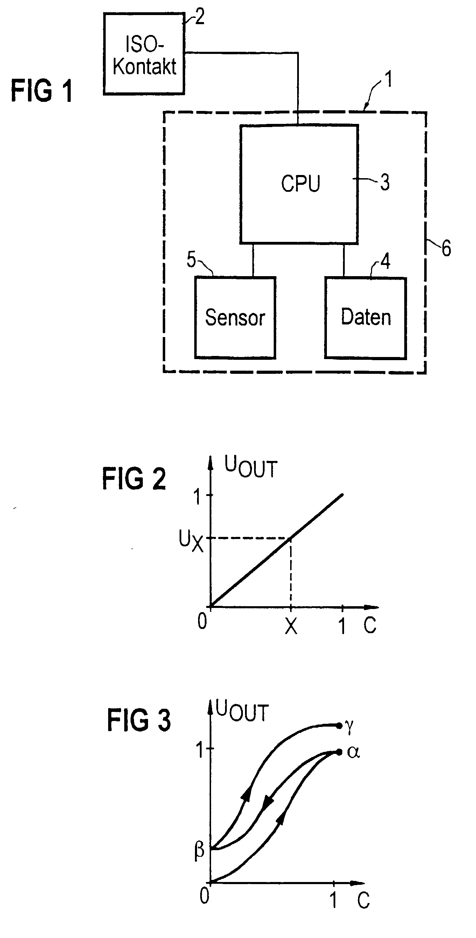

Figur 1 zeigt ein Blockschaltbild einer erfindungsgemäßen Chipkarte mit einem Mikroprozessor 1, der mit ISO-Kontakten 2 verbunden ist, die auf der Oberfläche der Chipkarte vorgesehen sind. Der Mikroprozessor 1 weist eine Steuerungseinheit 3 und einen Datenspeicher 4 auf. Weiterhin ist im Bereich der Steuerungseinheit 3 ein Sensor 5 vorgesehen. Die Steuerungseinheit 3, der Datenspeicher 4 und der Sensor 5 sind im Inneren eines Gehäuses 6 angeordnet. Das Gehäuse 6 besteht aus einer thermisch aushärtbaren Masse, in der eine nicht gezeigte Substanz eingelagert ist, auf die der Sensor 5 anspricht.

Im Betrieb der Chipkarte tauscht der Mikroprozessor 1 über den ISO-Kontakt 2 Daten aus einem externen Speicher eines nicht dargestellten Lese/Schreib-Geräts mit Daten aus dem Datenspeicher 4 und umgekehrt aus. Bei jedem Verarbeitungsschritt überprüft die Steuerungseinheit 3, ob der Sensor 5 auf die im Gehäuse 6 vorgesehene Substanz anspricht. Solange der Sensor 5 auf die im Gehäuse 6 vorhandene Substanz anspricht, erhält die Steuerungseinheit 3 den Betrieb aufrecht. Sobald der Sensor 5 die im Gehäuse 6 vorgesehene Substanz nicht mehr abtastet, etwa weil diese anläßlich einer Manipulation entfernt und durch eine Substanz mit anderer Zusammensetzung ersetzt worden ist, schaltet sich die Steuerungseinheit 3 zwingend und unwiderruflich ab. Eine Analyse des Funktionsablaufes innerhalb des Mikroprozessors 1 ist so ausgeschlossen.

Figur 2 zeigt ein Betriebsdiagramm eines Sensors, der im erfindungsgemäßen Mikroprozessor 1 und in der erfindungsgemäßen Chipkarte angeordnet werden kann. Die Abzisse des Diagramms aus Figur 2 bezeichnet dabei die Konzentration der im Gehäuse 6 vorgesehenen Substanzen. Diese variiert von 0 bis 1. Die Ordinate gibt die normierte Ausgangsspannung des Sensors in Abhängigkeit von der Konzentration der Substanz im Gehäuse 6 an. So ergibt sich bei einer Konzentration x der Substanz im Gehäuse 6 eine normierte Ausgangspannung Uₓ. Anhand der Ausgangsspannung Uₓ kann die Steuerungseinheit 3 feststellen, ob und in welcher Konzentration die Substanz in der Umgebung des Sensors vorliegt.

Figur 3 zeigt ein Betriebsdiagramm eines Sensors, der im wesentlichen demjenigen entspricht, dessen Diagramm in Figur 2 gezeigt ist. Der Sensor, dessen Betriebsdiagramm in Figur 3 dargestellt ist, weist jedoch eine ausgeprägte Hysterese-Charakteristik auf. Diese Charakteristik kann im Zusammenhang mit der erfindungsgemäßen Chipkarte besonders vorteilhaft zum Schutz gegen unerwünschte Manipulationen eingesetzt werden, wie nachfolgend beschrieben wird.

Bei der Herstellung des Mikroprozessors 1 steigt die Ausgangsspannung U_{OUT} des in Figur 3 dargestellten Sensors von "0" auf den Wert α an. Dieser Wert α wird nach Beendigung der Herstellung des Mikroprozessors 1 von der Steuereinheit 3 eingelesen und fest in einen PROM-Bereich des Datenspeichers 4 eingebrannt. Wird bei einer Manipulation an der Chipkarte die den Sensor 5 umgebene Substanz entfernt, nimmt die Ausgangsspannung des Sensors 5 auf den Wert β ab, der im Bereich der Ordinate des in Figur 3 gezeigten Diagramms eingezeichnet ist. Dieser Wert β ist aufgrund der Hysterese-Charakteristik des Sensors 5 größer als der Ausgangswert "0" vor der Herstellung des Mikroprozessors 1. Bei einem erneuten Anbringen der Substanz im Bereich des Sensors 5 steigt die Ausgangsspannung des Sensors 5 wieder an, und zwar auf einen Wert der größer als der sich nach der Herstellung des Mikroprozessors 1 einstellende Wert α ist. Dieser Unterschied beruht ebenfalls auf der Hysterese-Charakteristik des Sensors 5. Dieser Unterschied in der Ausgangsspannung (γ-α) wird von der Steuerungseinheit 3 abgetastet, wobei sie auf eine Manipulation im Bereich des Mikroprozessors 1 schließt, wenn der Wert (γ-α) eine gewisse Schranke überschreitet, die vorgesehen ist, um einen unerwünschten Ausfall der Chipkarte aufgrund eines Alterungseffekts des Sensors 5 zu kompensieren.

## Patentansprüche

1. Mikroprozessor, insbesondere zur Verwendung in einer Chipkarte, mit einer Steuerungseinheit und mit einem die Steuerungseinheit umgebenden Gehäuse, wobei im Bereich des Gehäuses (6) mindestens ein mit der Steuerungseinheit (3) in Verbindung stehender Sensor (5) vorgesehen ist,
wobei ferner im Bereich des Gehäuses (6) wenigstens eine vom Sensor wahrnehmbare Substanz vorgesehen ist,
**dadurch gekennzeichnet, daß**
die Substanz wenigstens zwei Komponenten aufweist, wobei wenigstens eine der Komponenten in einer vorbestimmten Konzentration vorliegt, die vom Sensor (5) anzeigbar ist,
wobei der Mikroprozessor (1) ferner so ausgebildet ist,
daß ein ihm vom Sensor zugeführtes, die vorbestimmte Konzentration anzeigendes Meßsignal dauerhaft abspeicherbar ist, und
wobei die Steuerungseinheit (3) so ausgebildet ist, daß sie sich in einen inaktiven Zustand versetzt bzw. durch den Sensor in einen inaktiven Zustand versetzbar ist,
wenn der Sensor (5) ein Meßsignal erzeugt, das eine von der vorbestimmten Konzentration abweichende Konzentration anzeigt.

2. Mikroprozessor nach Anspruch 1,
**dadurch gekennzeichnet, daß**
der Sensor so ausgebildet ist, daß er ein Meßsignal liefert, das hinsichtlich einer wiederholten Abtastung eines wechselnden Umweltzustandes einen Hysterese-Charakter aufweist.

3. Mikroprozessor nach einem der vorhergehenden Ansprüche,
**dadurch gekennzeichnet, daß**
der Sensor (5) im Inneren des Gehäuses vorgesehen ist.

4. Mikroprozessor nach einem der vorhergehenden Ansprüche,
**dadurch gekennzeichnet, daß**
der Sensor ein digitales Ausgangssignal liefert.

5. Mikroprozessor nach einem der Ansprüche 1 bis 3,
**dadurch gekennzeichnet, daß**
der Sensor ein analoges Ausgangssignal liefert.

6. Mikroprozessor nach einem der vorhergehenden Ansprüche,
**dadurch gekennzeichnet, daß**
der Mikroprozessor (1) so ausgebildet ist, daß ein ihm von wenigstens einem Sensor zugeführtes Signal dauerhaft abspeicherbar ist.

7. Chipkarte mit einem Mikroprozessor nach einem der Ansprüche 1 bis 6.

## Claims

1. Microprocessor, in particular for use in a chip card, with a control unit and with a housing surrounding the control unit, at least one sensor (5) which is connected to the control unit (3) being provided in the region of the housing (6), at least one substance which can be perceived by the sensor also being provided in the region of the housing (6), characterized in that the substance has at least two components, at least one of the components being present in a predefined concentration which can be displayed by the sensor (5), the microprocessor (1) also being designed in such a way that a measurement signal which is fed to it by the sensor and which displays the predefined concentration can be permanently stored, and the control unit (3) being designed in such a way that it goes into an inactive state or can be placed in an inactive state by the sensor if the sensor (5) generates a measurement signal which displays a concentration which differs from the predefined concentration.

2. Microprocessor according to Claim 1, characterized in that the sensor is designed in such a way that it supplies a measurement signal which has a hysteresis character with respect to a repeated sensing of a changing ambient state.

3. Microprocessor according to one of the preceding claims, characterized in that the sensor (5) is provided in the interior of the housing.

4. Microprocessor according to one of the preceding claims, characterized in that the sensor supplies a digital output signal.

5. Microprocessor according to one of Claims 1 to 3, characterized in that the sensor supplies an analog output signal.

6. Microprocessor according to one of the preceding claims, characterized in that the microprocessor (1) is designed in such a way that a signal which is fed to it from at least one sensor can be stored permanently.

7. Chip card with a microprocessor according to one of Claims 1 to 6.

## Revendications

1. Microprocesseur, destiné notamment à une carte à puce, avec une unité de commande et avec un boîtier ou enveloppe enrobant l'unité de commande, au moins un détecteur (5), qui est relié l'unité de commande (3), étant prévu dans la zone du boîtier (6),
au moins une substance, perceptible par le détecteur, étant en outre prévue dans la zone du boîtier (6),
**caractérisé par le fait**
que la substance comporte au moins deux composantes,
au moins une des composantes ayant une concentration prédéterminée qui peut être indiquée par le détecteur (5),
le microprocesseur (1) étant, en outre conçu de telle sorte qu'un signal, qui lui est transmis par le détecteur et qui indique la concentration prédéterminée, puisse être mémorisé à demeure, et
l'unité de commande (3) étant conçue de telle sorte qu'elle se mette dans un état inactif ou qu'elle puisse être mise par le détecteur dans un état inactif, quand le détecteur (5) génère un signal de mesure qui indique une concentration différente de la concentration prédéterminée.

2. Microprocesseur selon la revendication 1
**caractérisé par le fait**
que le détecteur est conçu de telle sorte qu'il délivre un signal de mesure qui présente un caractère à hystérésis quant à l'interrogation répétée d'un état changeant de l'environnement.

3. Microprocesseur selon l'une des revendications précédentes
**caractérisé par le fait**
que le détecteur (5) est prévu à l'intérieur du boîtier.

4. Microprocesseur selon l'une des revendications précédentes
**caractérisé par le fait**
que le détecteur délivre un signal de sortie numérique.

5. Microprocesseur selon l'une des revendications 1 à 3
**caractérisé par le fait**
que le détecteur délivre un signal de sortie analogique.

6. Microprocesseur selon l'une des revendications précédentes
**caractérisé par le fait**
que le microprocesseur (1) est conçu de telle sorte qu'un signal, qui lui est transmis par au moins un détecteur, peut être mémorisé à demeure.

7. Carte à puce avec un microprocesseur selon l'une des revendications 1 à 6.
